# EUROPEAN PATENT APPLICATION

(11) **EP 1 713 027 A2**
(43) Date of publication of application: **18.10.2006**
(21) Application number: 06006239.5
(22) Date of filing: 27.03.2006
(51) Int. Cl.: G06K 19/077, A63F 1/02

(54) **Game card with an IC device and an antenna**

(30) Priority: 29.03.2005 JP 2005093671
(71) Applicant: Aruze Corp., Tokyo (JP); Seta Corp., Tokyo (JP)
(72) Inventor: Koyama, Toshimi, Tokyo 135-0063 (JP); Nonaka, Nobuyuki, Tokyo 135-0063 (JP)
(74) Representative: HOFFMANN EITLE

(57) **Abstract**

There is provided a game card (10) including an IC device (104) and an antenna (105) that is difficult to notice even if the card is torn to discard. The game card (10) stores authentication information readable by a reader/writer that emits electromagnetic waves, and includes an IC device (104) for transmitting and receiving data according to a request from the reader/writer, an intermediate member (102) having a space for housing the IC device, and an antenna (105) provided by printing on the intermediate member with conductive ink and connected to the IC device. A front surface member (101) and a rear surface member (103) are joined to opposite sides of the intermediate member by bonding or the like to form the game card.

## Description

The present disclosure relates to subject matters contained in Japanese Patent Application No. 2005-93671 filed on March 29, 2005, which are expressly incorporated herein by reference in its entireties.

### BACKGROUND OF THE INVENTION

### 1. Field of the Invention

The present invention relates to a game card, and more particularly to a game card from which data can be read by a reading device such as an IC card reader/writer.

### 2. Description of the Prior Art

Many of games that have been enjoying popularity use game cards. Such games include card games such as poker and black jack, and trading games using trading cards. Such games are sometimes played in recreation halls such as casinos, betting money or game values valid only in the recreation halls.

Imprudent players sometimes cheat at games using the game cards. For example, "switching" is often performed to previously prepare game cards of the same type as game cards used in a recreation hall, and switch the game cards dealt on a game table by a dealer so as to be in favor of a player him/herself. An imprudent player thus freely controls development of the game to obtain a large amount of payoff.

Such cheating is disadvantageous for the recreation hall because of loss of a large amount of payoff, and also for other honest players because of loss of interest.

Thus, management of a recreation hall proposes a technique of embedding an IC device (a resonant tag) having a proximity communication function in a game card and distinguishing between a normal game card and an unfair game card placed by the "switching" in order to prevent cheating by the "switching" (for example, Japanese Patent Laid-Open No. 2004-213276).

A conventional game card including an IC device is such that a coil-shaped antenna is connected to the IC device, which is packed with plastic or paper. In this case, a thickness of the game card is relatively larger than a general game card, and thus the card cannot be practically used.

In casinos or the like, cards are generally torn after the finish of a game. When a conventional card including a coil-shaped antenna is torn, the coil-shaped antenna appears and a tag is found to be embedded in the card, which may cause discomfort to a player.

The present invention provides a game card including an IC device and an antenna that is hard to be found when the card is torn to be discarded.

### SUMMARY OF THE INVENTION

A first aspect of the present invention proposes a game card that stores data readable by a reading device having an antenna that emits electromagnetic waves.

This game card includes circuit means (for example, an IC device) for transmitting and receiving data according to a request from the reading device, a plate member (for example, an intermediate member or a rear surface member) having a housing space (for example, a space) for housing the circuit means, and antenna means (for example, an antenna or an antenna pattern) provided on the plate member and connected to the circuit means, the antenna means being a conductive layer provided on the plate member.

In the game card, the antenna means may be formed by printing with conductive ink. Further, white or transparent conducive ink may be used to provide a game card including an antenna that is hard to be found by a player.

The present invention provides the game card including the antenna that is hard to be found when the card is torn to be discarded.

### BRIEF DESCRIPTION OF THE DRAWINGS

FIG. 1 is a perspective view of an appearance of a game table;
FIG. 2 is a block diagram of a function of the game table;
FIG. 3 is an exploded perspective view of a game card according to a first embodiment;
FIG. 4 is a sectional view of an intermediate member according to the first embodiment;
FIG. 5 is a sectional view of an enlarged portion of the game card according to the first embodiment;
FIG. 6 shows electromagnetic waves that a reader/writer generates when reading the game card;
FIG. 7 is an exploded perspective view of a game card according to a second embodiment;
FIG. 8 is a sectional view of a rear surface member according to the second embodiment; and
FIG. 9 is a sectional view of an enlarged portion of the game card according to the second embodiment.

The accompanying drawings, which are incorporated in and constitute apart of the specification, illustrate embodiments of the invention, and together with the general description given above and the detailed description of the embodiments given below, serve to explain the principles of the invention.

### DESCRIPTION OF THE PREFERRED EMBODIMENTS

Now, embodiments according to the present invention will be described in detail with reference to the drawings.

### [1. A game table on which a game card is used]

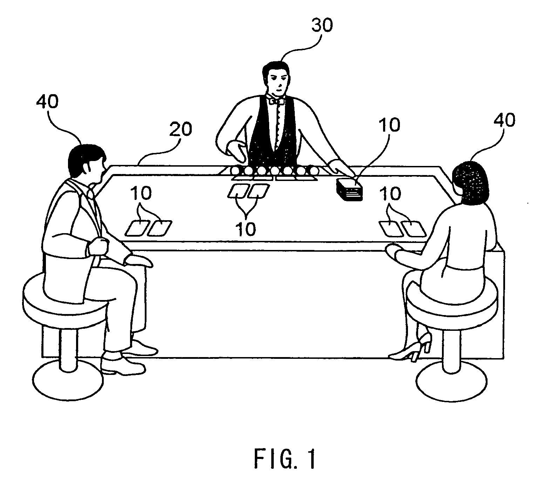

First, a game table on which a game card according to the embodiments will be described. FIG. 1 is a perspective view of an appearance of the game table on which the game card according to the embodiments is used.

The game table 20 according to the embodiments having a table surface on which game cards 10 are placed is a tool or a facility for a game using the game cards.

In the embodiments, a dealer 30 and a plurality of players 40 stand or sit face-to-face around the game table 20 for a game.

The game cards 10 are dealt from a pile by the dealer 30 to the dealer 30 and the players 40 and placed on the game table 20. The players 40 take the game cards 10 in the hands, look at details of the game cards 10, and sometimes request the dealer 30 to replace the game cards 10. The dealer 30 replaces the game cards 10 according to the request of the players.

Switching of the game cards 10 that is cheating is likely to be performed, for example, when the players 40 take the game cards 10 to confirm the details of the cards as described above.

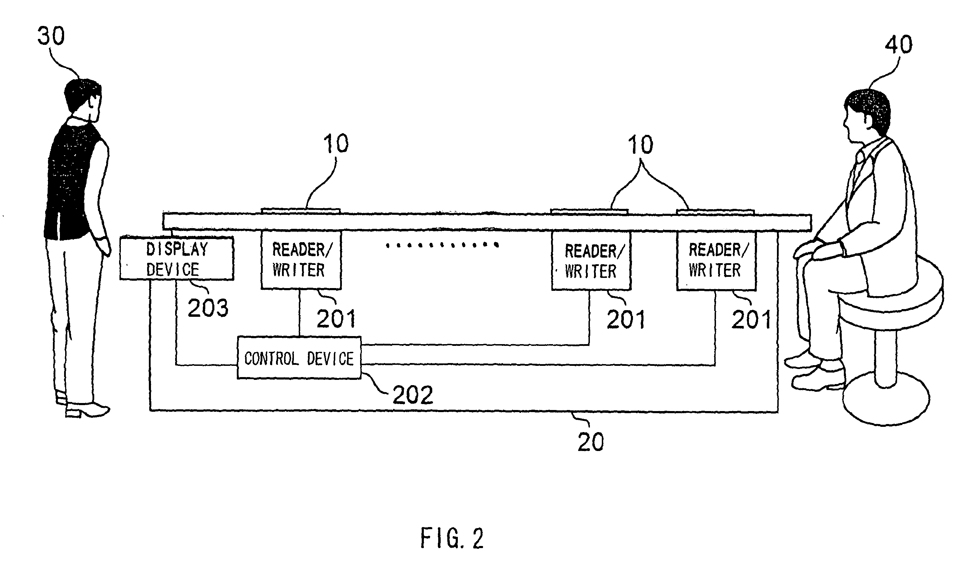

FIG. 2 is a block diagram of a function showing a main internal configuration of the game table 20. In the game table 20, a plurality of reader/writers 201, a control device 202 connected to the reader/writers 201, and a display device 203 connected to the control device 202 are provided in the game table 20 for reading the game cards 10 placed on the game table 20.

The reader 201 that is a reading device reads information (in this example, authentication information) stored in the game card 10 when the game card 10 is placed in a reading range, and outputs read information to the control device 202. The reader is herein referred to as a "reader/writer", which does not mean that a writing function is always necessary. A device having at least a function of reading data stored in the game card 10 corresponds to the "reader/writer" in the specification.

The game card 10 stores the authentication information. The authentication information is data indicating that the game card 10 is allowed to be used in the game, for example, predetermined N-bite numbers. The authentication information may be different among or common to the game cards 10. For example, all of the 53 game cards 10 that constitute a set of playing cards may store common authentication information. The 53 game cards 10 may store different authentication information so as to be distinguishable among the kinds of the cards (for example, A (ace) of spade, 2 of heart, or the like).

The control device 202 stores the authentication information of the game cards 10 that are allowed to be used. When receiving the read authentication information from the reader/writer 201, the control device 202 compares the authentication information read by the reader/writer 201 and the stored authentication information, and determines whether the read authentication information is information of the game card 10 that is allowed to be used. The control device 202 outputs a determination result to a display device 203.

The display device 203 displays the determination result as an image, and the dealer 30 can learn whether the game card 10 used on the game table 20 is the game card 10 that is allowed to be used, that is, whether an unfair game card is not used by switching or the like.

The display device 203 needs not to be provided in the game table 20, but may be provided in an environment remote from the game table 20, for example, a monitoring room in a casino hall. The image needs not to be displayed as long as an occurrence of cheating can be notified, and notifying means (a lamp or a speaker) may be provided instead of the display device 203.

### [2. The first embodiment]

### [2.1. A configuration example of the game card]

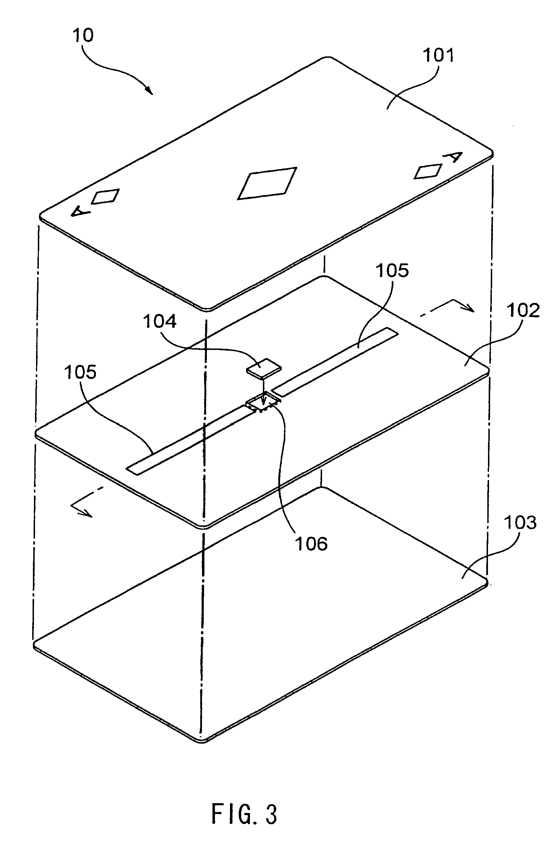

Next, a configuration example of the game card 10 according to this embodiment will be described with reference to FIGS. 3 to 5.

FIG. 3 is an exploded perspective view of the game card 10. The shown game card 10 includes a front surface member 101 on which a front surface (marks, numerals, pictures, or the like) of the card is printed, an intermediate member 102 that is a plate member on which an antenna 105 that is antenna means is provided by printing, and in which a space 106 that is a housing space for housing an IC device 104 is formed, a rear surface member 103 on which a rear surface (patterns or pictures common to all cards) of the card is printed, and the IC device 104 that is circuit means stored in the space 106 and electrically connected to the antenna 105.

The front surface member 101, the intermediate member 102, and the rear surface member 103 are plate members of the size of the card, and made of appropriately strong material, for example, resin such as plastic or cardboard. The front surface member 101, the intermediate member 102, and the rear surface member 103 needs not to be made of the same material.

The space 106 formed in the intermediate member 102 is a through hole that can house the IC device 104, and thus the intermediate member 102 needs to have at least the same thickness as or a larger thickness than the IC device 104.

The IC device 104 is an electronic component designed to execute functions of processing, storing, and controlling input/output, and has a function of providing stored information to the reader/writer 201 according to a request from the reader/writer 201. The IC device 104 needs not to be constituted by one chip, but may have a configuration in which a plurality of ICs or other electronic components are provided on a circuit board.

The IC device 104 is stored in the space 106 formed in substantially the center of the intermediate member 102, and electrically connected to the antenna 105. The space 106 needs not to be formed in substantially the center of the intermediate member 102, but may be formed in any spot in the intermediate member. For example, the space 106 may be formed in any of four corners of the intermediate member 102. The space 106 may have any shape as long as the space can house the IC device 104, and needs not have the same shape as the IC device.

The antenna 105 is a conductive layer formed on the front surface of the intermediate member 102. The antenna 105 may be provided on at least one surface of the intermediate member 102. The antenna 105 is provided by, for example, printing on the intermediate member 102 with conductive ink, or forming a conductive layer on the front surface of the intermediate member 102 by a technique (vapor deposition or spattering) that can replace the printing. When a configuration electrically connectable to the IC device 104 is used, the antenna 105 may be formed on the front surface member 101 and/or the rear surface member 103.

Pasted indium oxide, ITO (Indium Tin Oxide), or the like is used as conductive ink for forming the antenna 105 to provide the antenna 105 formedof a transparent conductive layer. When the antenna 105 formed of such a transparent conductive layer is used, the antenna 105 does not appear from a section when the game card 10 is torn, thereby preventing mistrust or discomfort from being caused to a player.

The antenna 105 serves to transmit and receive signals between the reader/writer 201 and the IC device 104, and convert a carrier wave from the reader/writer 201 to electric power to supply the electric power to the IC device 104.

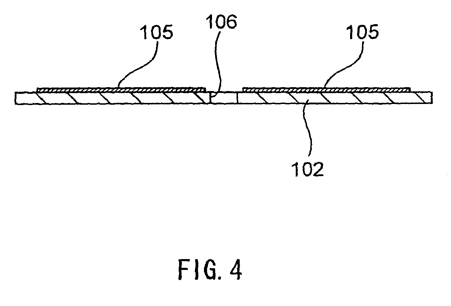

FIG. 4 is a sectional view of the intermediate member 102. The intermediate member 102 has, in substantially the center thereof, the space 106 having a capacity that can house the IC device 104. The space 106 is the through hole formed by cutting or boring in the intermediate member 102.

The conductive layer that is the antenna 105 is formed on the intermediate member 102. In FIG. 4, the thickness of the antenna 105 is enhanced for easy understanding, but actually, the thickness is almost negligible because the antenna can be formed by etching or printing.

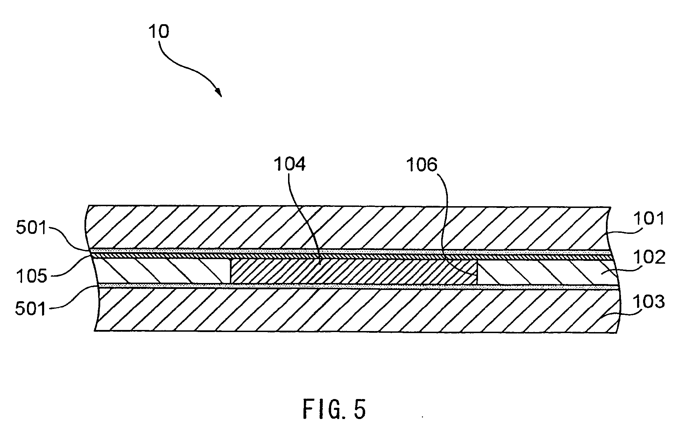

FIG. 5 is an enlarged sectional view of a state in which the front surface member 101, the intermediate member 102, and the rear surface member 103 are bonded to complete the game card 10, with the IC device 104 and portions therearound being enlarged.

An adhesive layer 501 such as an adhesive is provided between the front surface member 101 and the intermediate member 102 so that the front surface member 101 and the intermediate member 102 do not easily peel.

The conductive layer that is the antenna 105 is previously formed on one surface (an upper surface in FIG. 5) of the intermediate member 102 by printing or the like. The IC device 104 is housed in the space 106 formed in the intermediate member 102 so as to be completely housed in the intermediate member 102 so that the IC device 104 does not push up the front surface member 101 and the rear surface member 103.

An adhesive layer 501 such as an adhesive is also provided between the rear surface member 103 and the intermediate member 102 so that the rear surface member 103 and the intermediate member 102 do not easily peel. Thus, the front surface member 101, the intermediate member 102, and the rear surface member 103 are integrated to complete the game card 10.

### [2.2. An operation example of the game card]

Next, an operation example of the game card 10 will be described.

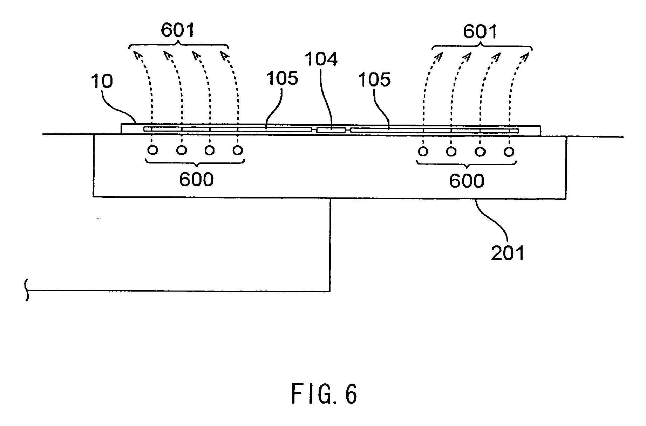

FIG. 6 shows electromagnetic waves that the reader/writer 201 generates when reading the game card 10 placed on the game table 20.

The reader/writer 201 generates electromagnetic waves of high frequency (for example, 880 MHz to 2.45 GHz) for reading the game card 10, and emits the electromagnetic waves 601 from an antenna (an electrode) 600 on the side of the reader/writer 201. The emitted electromagnetic waves are received by the antenna 105 of the game card 10 and supplied to the IC device 104 as electric power.

The game card 10 receives the electromagnetic waves emitted from the reader/writer 201. The IC device 104 demodulates the received electromagnetic waves, recognizes a command or a request from the reader/writer 201, performs processing according thereto, and transmits data to the reader/writer 201 according to the request.

When the game card 10 transmits data (in this embodiment, authentication information) to the reader/writer 201, a so-called back scattering coupling method can be used. Thus, the IC device 104 can modulate, by switching internal impedance, the electromagnetic waves reflected from the antenna of the game card 10, and transmit data from the game card 10 to the reader/writer 201.

### [3. Second embodiment]

### [3.1. A configuration example of a game card]

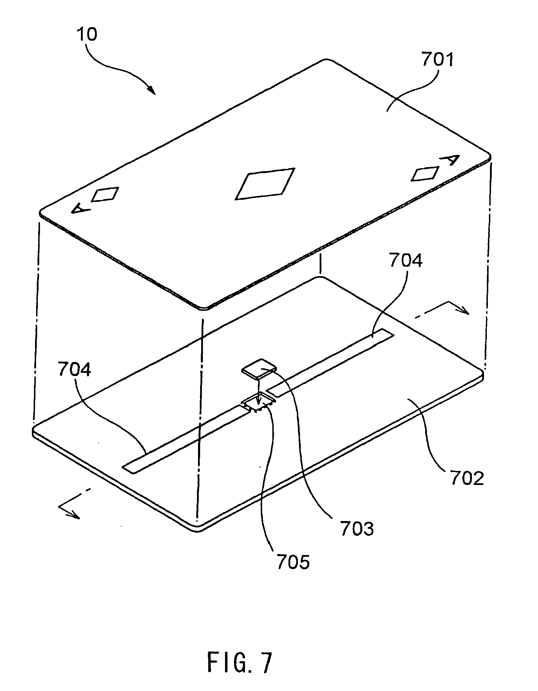

Next, a configuration example of a game card 10 according to a second embodiment will be described with reference to FIGS. 7 to 9. The game card 10 according to the second embodiment is constituted by two layers and different from the game card 10 according to the first embodiment constituted by the three layers.

FIG. 7 is an exploded perspective view of the game card 10 according to the embodiment. The shown game card 10 includes a front surface member 701 on which a front surface (marks, numerals, pictures, or the like) of the card is printed, a rear surface member 702 that is a plate member on which an antenna 704 that is antenna means is provided by printing, in which a space 705 that is a housing space for housing an IC device 703 is formed, and on which a rear surface (patterns or pictures common to all cards) of the card is printed, and the IC device 703 that is circuit means stored in the above described space 705 and electrically connected to the antenna 704.

The front surface member 701 and the rear surface member 702 are plate members of the size of the card, and made of appropriately strong material, for example, resin such as plastic or cardboard. The front surface member 701 and the rear surface member 702 need not to be made of the same material.

The space 705 formed in the rear surface member 702 is a recess that can house the IC device 703, and thus the rear surface member 702 needs to have at least the same thickness as or a larger thickness than the IC device 703.

Like the IC device 104 according to the first embodiment, the IC device 703 is an electronic component designed to execute functions of processing, storing, and controlling input/output, and has a function of providing stored information to a reader/writer 201 according to a request from the reader/writer 201. The IC device 703 needs not to be constituted by one chip, but may have a configuration in which a plurality of ICs or other electronic components are provided on a circuit board.

The IC device 703 is stored in the space 705 formed in substantially the center of the rear surface member 702, and electrically connected to the antenna 704. The space 705 needs not to be formed in substantially the center of the rear surface member 702, but may be formed in any spot in the rear surface member. For example, the space 705 may be formed in any of four corners of the rear surface member 702. The space 705 may have any shape as long as the space can house the IC device 703, and needs not have the same shape as the IC device 703.

The antenna 704 is a member like the antenna 105 according to the first embodiment, and a conductive layer or a film formed on an inner surface of the rear surface member 702. The antenna 704 is provided by, for example, printing on the rear surface member 702 with conductive ink, or forming a conductive layer on the front surface of the rear surface member 702 by a technique (vapor deposition or spattering) that can replace the printing. When a configuration electrically connectable to the IC device 703 is used, the antenna 704 may be formed on an inner surface of the front surface member 701.

Pasted indium oxide, ITO (Indium Tin Oxide), or the like is used as conductive ink for forming the antenna 704 to provide the antenna 704 formed of a transparent conductive layer or film. When the antenna 704 formed of such a transparent conductive layer or film is used, the antenna 704 does not appear from a section when the game card 10 is torn, thereby preventing mistrust or discomfort from being caused to a player.

The antenna 704 serves to transmit and receive signals between the reader/writer 201 and the IC device 703, and convert a carrier wave from the reader/writer 201 to electric power to supply the electric power to the IC device 703.

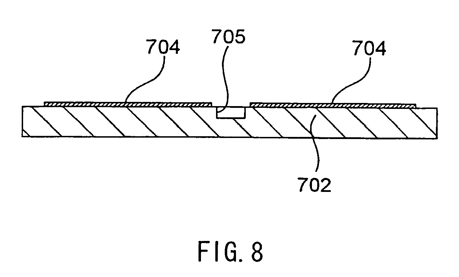

FIG. 8 is a sectional view of the rear surface member 702. The rear surface member 702 has, in substantially the center thereof, the space 705 having a capacity that can house the IC device 703. The space 705 is the recess formed by pressing the rear surface member 702.

The conductive layer that is the antenna 704 is formed on one surface (a surface that is not exposed in the game card 10) of the rear surface member 702. In FIG. 8, the thickness of the antenna 704 is enhanced for easy understanding, but actually, the antenna is formed by etching or printing and the thickness is almost negligible.

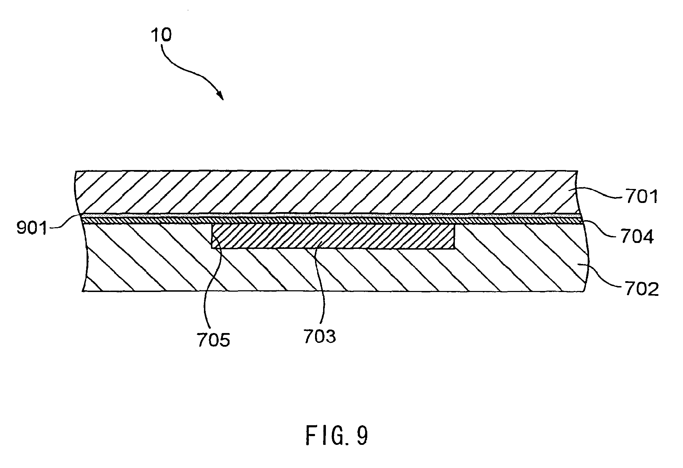

FIG. 9 is an enlarged sectional view of a state in which the front surface member 701 and the rear surface member 702 are bonded to complete the game card 10, with the IC device 703 and portions therearound being enlarged.

An adhesive layer 901 such as an adhesive is provided between the front surface member 701 and the rear surface member 702 so that the front surface member 701 and the rear surface member 702 do not easily peel. Thus, the front surface member 101 and the rear surface member 702 are integrated to complete the game card 10.

The conductive layer that is the antenna 704 is previously formed on one surface (an upper surface in FIG. 9) of the rear surface member 702 by printing or the like. The IC device 703 is housed in the space 705 formed in the rear surface member 702 so as to be completely housed in the rear surface member 702 so that the IC device 703 does not push up the front surface member 701 and the rear surface member 702.

In the above described configuration example, the antenna 704 and the space 705 are provided in the rear surface member 702, but the present invention holds even if the antenna 704 and the space 705 are provided in the front surface member 701.

A reading operation of the game card 10 according to the second embodiment by the reader/writer 201 is the same as the game card 10 according to the first embodiment, and thus the description thereof will be omitted.

### [4. Advantage]

According to the present invention, the game card including the IC device can be formed into a completely flat shape. Thus, the game cards can be handled in completely the same manner as cards including no IC device even in stacking or shuffling.

Further, the card is flat without bulging caused by the IC device, and thus even if strong pressure is applied to the card (for example, if the cards are stacked and hit on the table, or the card is pressed on the table with a casino chip or the like being placed on the card), the pressure is not concentrated on the IC device, thereby significantly reducing the possibility of damage to the IC device.

Additional advantages and modifications will readily occur to those skilled in the art. Therefore, the invention in its broader aspects is not limited to the specific details or representative embodiments shown and described herein. Accordingly, various modification may be made without departing from the spirit or scope of the general inventive concept as defined by the appended claims and their equivalents.

## Claims

1. A game card that stores data readable by a reading device that emits electromagnetic waves, **characterized in that** said game card comprises:
circuit means for transmitting and receiving data according to a request from the reading device;
a plate member having a housing space for housing said circuit means; and
antenna means provided on said plate member and connected to said circuit means,
wherein said antenna means is a conductive layer provided on said plate member.

2. The game card according to claim 1, wherein said antenna means is formed by providing a conductive material on said plate member.

3. The game card according to claim 2, wherein said antenna means is formed by printing with conductive ink.

4. The game card according to claim 2, wherein said antenna means is formed by depositing conductive material on said plate member.

5. The game card according to claim 2, wherein said antenna means is formed by spattering conductive material on said plate member.

6. The game card according to any one of claims 1 to 5, wherein said antenna means is transparent conductive layers.
